# FASCICULE DE BREVET EUROPEEN

(11) **EP 3 177 571 B1**
(45) Date de publication et mention de la délivrance du brevet: **28.10.2020**
(21) Numéro de dépôt: 15759890.5
(22) Date de dépôt: 05.08.2015
(51) Int. Cl.: C02F 1/42, B01J 49/00, C02F 1/00

(54) **DISPOSITIF DE TRAITEMENT D'EAU DE GRANDE CAPACITÉ**
WASSERBEHANDLUNGSVORRICHTUNG MIT HOHER KAPAZITÄT
LARGE-CAPACITY WATER TREATMENT DEVICE

(30) Priorité: 05.08.2014 FR 1457595
(43) Date de publication de la demande: 14.06.2017
(73) Titulaire: Cappers, 63300 Thiers (FR)
(72) Inventeur: STEINER, Michel, F-78180 Montigny-Le-Bretonneux (FR)
(74) Mandataire: Fédit-Loriot
(86) Numéro de dépôt international: PCT/FR2015/052162
(87) Numéro de publication internationale: WO 2016/020621

(56) Documents cités:
- EP-A1- 0 006 409
- EP-A1- 1 321 433
- WO-A1-97/27413
- FR-A1- 2 891 164
- US-A- 3 616 920
- US-A- 3 797 523
- US-A- 5 069 779
- US-A- 6 001 262
- US-A1- 2002 117 431
- US-B1- 6 596 159

## Description

La présente invention se rapporte à un dispositif de traitement d'eau permettant notamment, de retirer d'une eau brute les substances minérales qu'elle contient et qui sont responsables de sa dureté.

Usuellement, on vient retirer des substances minérales d'une eau brute au moyen d'une résine échangeuse d'ions. Aussi, un dispositif de traitement d'eau comprend un réservoir contenant la résine échangeuse d'ions. Le réservoir comporte un col et un tube plongeant dans le réservoir à partir du col. L'extrémité supérieure du tube au niveau du col constitue une sortie du réservoir, tandis que le pourtour constitue une entrée du réservoir. Le dispositif de traitement d'eau comprend également une vanne de distribution installée sur le col du réservoir, celle-ci présente une arrivée d'eau brute à traiter, et une sortie d'eau traitée opposée. Au surplus, le dispositif de traitement d'eau comprend un réservoir de liquide régénérant relié à la vanne de distribution et une vanne d'alimentation en liquide régénérant pour pouvoir commander l'alimentation de la résine échangeuse d'ions en liquide régénérant dans une phase de régénération. On pourra se référer au document FR 2 891 164, lequel décrit un tel dispositif de traitement.

La vanne de distribution présente une chambre de distribution et un organe tubulaire commandable monté en translation à l'intérieur de cette chambre de distribution. L'organe tubulaire présente deux têtes opposées asymétriques séparées par une gorge et il est relié à la vanne d'alimentation en liquide régénérant. Plus précisément, la chambre de distribution présente une portion cylindrique à l'intérieur de laquelle l'organe tubulaire est guidé en translation, ainsi qu'une pluralité de portions annulaires entourant la portion cylindrique et débouchant radialement dans celle-ci. Parmi la pluralité de portions annulaires, deux sont distales et deux autres situées entre les deux portions distales, sont proximales. Les portions annulaires distales et proximales sont respectivement contiguës. L'arrivée d'eau débouche alors radialement dans l'une des portions annulaires distales, et à l'opposé, l'autre des portions annulaires distales débouche radialement dans la sortie d'eau traitée. Quant aux portions annulaires proximales, l'une, voisine de la portion annulaire distale dans laquelle débouche l'arrivée d'eau, débouche radialement dans l'entrée de réservoir, tandis que la sortie de réservoir débouche dans l'autre portion annulaire proximale voisine de la portion annulaire distale débouchant dans la sortie d'eau traitée.

Aussi, la vanne de distribution comprend un actionneur permettant de commander en translation l'organe de distribution à l'intérieur de la portion cylindrique de la chambre de distribution, et partant, la vanne d'alimentation en liquide régénérant. Ainsi, dans une première position de service, les portions proximales et distales contiguës communiquent respectivement l'une avec l'autre, et de la sorte, l'arrivée d'eau brute communique avec l'entrée de réservoir, tandis que la sortie de réservoir communique avec la sortie d'eau traitée. Et au surplus, la vanne d'alimentation en liquide régénérant est dans une position fermée.

En outre, la vanne de distribution présente deux canaux de régénération, l'un débouchant radialement dans la portion annulaire proximale voisine de la portion annulaire distale dans laquelle débouche l'arrivée d'eau, l'autre canal, débouchant lui, dans l'autre des portions annulaires proximales. Le premier permet l'écoulement du liquide régénérant à travers l'entrée du réservoir, selon un mode de régénération dit à co-courant, tandis que le second permet l'écoulement du liquide régénérant à travers la sortie du réservoir, selon un mode dit à contre-courant. Ce choix de procédé de régénération est déterminé au montage du dispositif de traitement d'eau en fonction de critères techniques et/ou d'usages. Et pour ce faire, d'une part l'organe de distribution à deux têtes asymétriques est orienté dans un sens donné, tandis que l'un des canaux de régénération est obturé.

L'organe de distribution peut ainsi être commandé dans une première position de traitement, commandant par la même la vanne d'alimentation en liquide régénérant en position ouverte, et dans laquelle l'écoulement dudit liquide régénérant est guidé à travers ladite entrée de réservoir.

L'autre mode de régénération, est obtenu, lorsque l'organe de distribution à deux têtes asymétriques est orienté dans un sens opposé et que l'autre des canaux de régénération est obturé. L'organe de distribution peut alors être commandé dans une seconde position de traitement, en commandant par la même la vanne d'alimentation en liquide régénérant en position ouverte, et en autorisant l'écoulement du liquide régénérant à travers la sortie du réservoir.

Dans un tel dispositif de traitement, la commande de la vanne d'alimentation en liquide régénérant est tributaire de la commande de l'organe tubulaire. Cela exige une conception adaptée et complexe et au surplus, détermine la position de la vanne d'alimentation en liquide régénérant sur la vanne de distribution.

Aussi, un problème qui se pose et que vise à résoudre la présente invention, est de fournir un dispositif de traitement d'eau d'une conception simplifiée et partant, d'un coup plus avantageux.

Dans ce but, la présente invention propose un dispositif de traitement d'eau comprenant, d'une part un réservoir de résine échangeuse d'ions présentant une entrée de réservoir et une sortie de réservoir, et une vanne de distribution installée sur ledit réservoir de résine présentant une arrivée d'eau brute et une sortie d'eau traitée et, d'autre part, un réservoir de liquide régénérant relié à ladite vanne de distribution et une vanne d'alimentation en liquide régénérant commandable entre une position ouverte et une position fermée, ladite vanne de distribution comportant, d'une part une chambre de distribution et un organe de distribution tubulaire commandable en translation monté à l'intérieur de ladite chambre de distribution et, d'autre part, un actionneur pour commander ledit organe de distribution tubulaire entre, une position de service dans laquelle ladite arrivée d'eau brute communique avec ladite entrée de réservoir, tandis que ladite sortie de réservoir communique avec ladite sortie d'eau traitée, et lorsque ladite vanne d'alimentation en liquide régénérant est commandée en position ouverte, soit une première position de traitement dans laquelle l'écoulement dudit liquide régénérant est guidé à travers ladite entrée de réservoir, soit une seconde position de traitement dans laquelle l'écoulement dudit liquide régénérant est guidé à travers ladite sortie de réservoir. Le dispositif de traitement d'eau comprend en outre un autre actionneur pour commander ladite vanne d'alimentation en liquide régénérant indépendamment dudit un actionneur dudit organe de distribution tubulaire tandis que ladite vanne de distribution comprend en outre un piston d'obturation monté à l'intérieur de ladite chambre de distribution dans le prolongement dudit organe de distribution tubulaire, et un dispositif d'entraînement pour pouvoir entraîner ledit piston d'obturation en translation indépendamment dudit organe de distribution tubulaire, de manière à pouvoir obturer la communication entre ladite sortie de réservoir et ladite sortie d'eau traitée.

Ainsi, une caractéristique de l'invention réside dans la mise en oeuvre d'un autre actionneur permettant de commander de façon autonome la vanne d'alimentation en liquide régénérant, et de la sorte, d'offrir une plus grande souplesse de conception de la vanne de distribution. Car en effet, il est alors plus aisé de prévoir le positionnement de l'organe de distribution tubulaire à l'intérieur de la portion cylindrique pour un écoulement optimal indépendamment de la commande de la vanne d'alimentation en liquide régénérant. Aussi, les coûts de conception et de réalisation de la vanne de distribution conforme à l'invention sont moindres que ceux des vannes de distribution conformes à l'art antérieur. Ladite vanne de distribution comprend le piston d'obturation monté à l'intérieur de ladite chambre de distribution pour pouvoir obturer la communication entre ladite sortie de réservoir et ladite sortie d'eau traitée. De la sorte, durant la phase de régénération de la résine échanges ions, on vient isoler la sortie d'eau vis-à-vis de la sortie de réservoir, mais aussi de toute autre ouverture. Et grâce à cela, comme on l'expliquera plus en détail dans la suite de la description, la vanne de distribution peut alors être commandée selon le mode de régénération à co-courant, ou à contre-courant sans qu'il soit nécessaire de prévoir un changement de position de l'organe de distribution tubulaire à l'intérieur de la chambre de distribution. De la sorte, le montage de cet organe de distribution tubulaire est simplifié. Aussi, ledit piston d'obturation est monté dans le prolongement dudit organe de distribution tubulaire. De la sorte, et ainsi qu'on l'expliquera ci-après, la conception de la chambre de distribution en est simplifiée. Egalement, le dispositif d'entraînement, de préférence un actionneur du type de celui qui permet d'entraîner l'organe de distribution tubulaire, permet d'entraîner le piston d'obturation indépendamment de l'organe de distribution tubulaire.

Selon l'invention, edit organe de distribution tubulaire présente une extrémité équipée d'un siège, tandis que ledit piston d'obturation est destiné à venir s'appliquer contre ledit siège pour obturer ledit organe de distribution tubulaire. De la sorte, le piston d'obturation et l'organe de distribution tubulaire coopèrent ensemble, de manière à pouvoir interdire l'écoulement d'eau à travers l'organe de distribution tubulaire. Cet agencement permet, dans une position axiale déterminée de l'ensemble, piston/organe de distribution, la régénération de la résine dans un mode à contre-courant, comme on le décrira en détail dans la suite de la description.

Selon une caractéristique avantageuse, ladite vanne de distribution comprend une chambre de réception dudit liquide régénérant et deux canaux d'écoulement prolongeant ladite chambre de réception respectivement vers ladite entrée de réservoir et vers ladite sortie de réservoir. Ainsi, le liquide régénérant est aspirée dans la chambre de réception par un dispositif venturi, par exemple, et ensuite il s'écoule à travers l'un ou l'autre des deux canaux d'écoulement, l'un rejoignant l'entrée du réservoir, l'autre la sortie. En outre, ladite vanne de distribution comprend avantageusement un obturateur destiné à être installé à travers l'un ou l'autre desdits deux canaux d'écoulement pour obturer ledit un ou ledit autre desdits canaux d'écoulement.

De plus, de façon avantageuse, ladite chambre de distribution présente, d'une part, une portion cylindrique, et d'autre part, deux portions annulaires distales et deux portions annulaires proximales, entourant respectivement ladite portion cylindrique et débouchant radialement dans ladite portion cylindrique. La communication entre certaines des portions annulaires est établie grâce à l'organe de distribution tubulaire, et à sa position axiale dans la portion cylindrique. Aussi, préférentiellement, ladite arrivée d'eau débouche radialement dans l'une desdites deux portions annulaires distales, tandis que l'autre desdites deux portions annulaires distales débouche radialement dans ladite sortie d'eau traitée.

De plus, ladite chambre de distribution présente deux portions annulaires d'extrémité borgnes, opposées l'une de l'autre et respectivement contiguës desdites deux portions annulaires distales.

En outre, avantageusement, l'une desdites deux portions annulaires proximales débouche radialement dans ladite entrée de réservoir, tandis que ladite sortie de réservoir débouche radialement dans l'autre desdites deux portions annulaires proximales. De la sorte, pour une position axiale donnée de l'organe de distribution tubulaire, correspondant à une position de service où l'eau brute est normalement traitée, la portion annulaire distale dans laquelle débouche l'arrivée d'eau est en communication avec la portion annulaire proximale débouchant dans l'entrée de réservoir, tandis que l'autre portion annulaire proximale est en communication avec l'autre portion annulaire distale. Quant au piston d'obturation, il est dans une position écartée de ladite autre portion annulaire distale pour autoriser l'eau traitée à s'écouler à travers la sortie d'eau traitée.

Au surplus, ledit organe de distribution tubulaire présente une tête longue et une tête courte opposée, séparées l'une de l'autre par une gorge. On observera que la tête longue s'étend sur une longueur apte à pouvoir isoler au moins l'une des portions annulaires vis-à-vis de la portion cylindrique.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en coupe axiale présentant un dispositif de traitement d'eau conforme à une première variante de réalisation de l'invention et selon un premier mode de fonctionnement ;
- la Figure 2 est une vue schématique partielle en coupe d'un objet de la Figure 1 selon le plan II-II ;
- la Figure 3 est une vue schématique partielle en coupe axiale de l'objet représenté sur la Figure 1, selon un deuxième mode de fonctionnement ;
- la Figure 4 est une vue schématique partielle en coupe axiale de l'objet représenté sur la Figure 1, selon un troisième mode de fonctionnement ;
- la Figure 5 est une vue schématique partielle en coupe axiale de l'objet représenté sur la Figure 1, selon un quatrième mode de fonctionnement ;
- la Figure 6 est une vue schématique en coupe axiale de l'objet représenté sur la Figure 1, selon un cinquième mode de fonctionnement ;
- la Figure 7 est une vue schématique en coupe axiale de l'objet représenté sur la Figure 1, selon un sixième mode de fonctionnement ; et,
- la Figure 8 est une vue schématique en coupe axiale présentant un dispositif de traitement d'eau conforme à l'invention dans une seconde variante de réalisation.

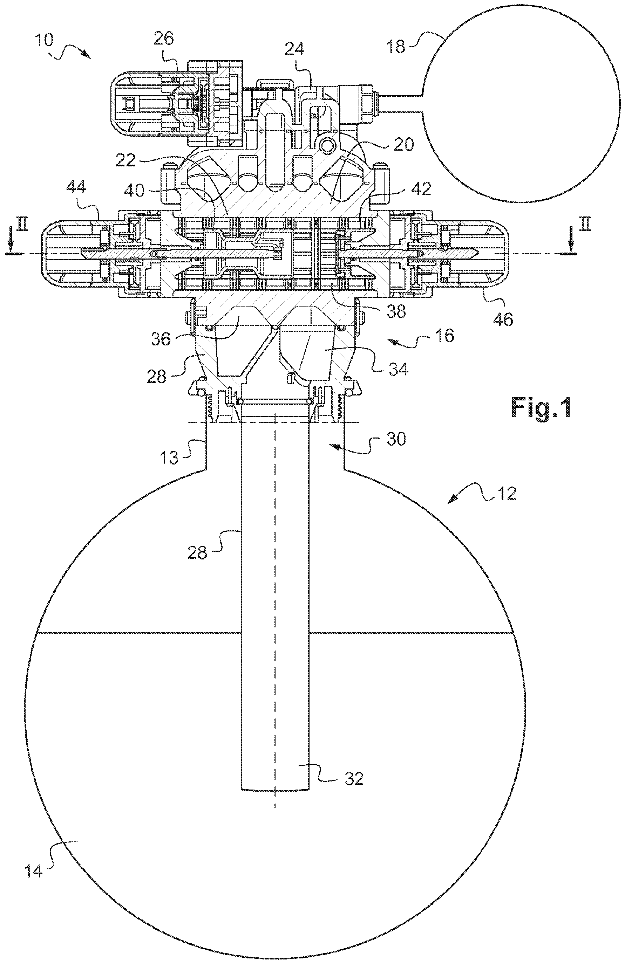

La Figure 1 illustre un dispositif de traitement d'eau 10 conforme à l'invention. Il comporte un réservoir de résine 12 présentant un col 13 et contenant une résine échangeuse d'ions 14, une vanne de distribution 16 montée sur le réservoir de résine 12 et un réservoir de liquide régénérant 18 relié par un conduit à la vanne de distribution 10. La vanne de distribution 16 comprend un corps de vanne 20 présentant un espace cylindrique de révolution transversal 22 le traversant de part en part. Cet espace cylindrique de révolution 22 définit une chambre de distribution. Le corps de vanne 20 comprend une embase de liaison 23 reliée au réservoir de résine 12 par son col 13, et il est surmonté d'une vanne d'alimentation en liquide régénérant 24 commandable par un premier actionneur électromécanique 26.

Le corps de vanne 20 est équipé d'un tube 28 plongeant dans le réservoir de résine 12. Il présente une extrémité supérieure 30 reliée à l'embase de liaison 23 et une extrémité inférieure d'aspiration 32 s'étendant dans le fond du réservoir de résine 12. L'extrémité supérieure 30 du tube 28 se prolonge à l'intérieur du corps de vanne 20 par un chemin de sortie 34 du réservoir lequel débouche dans l'espace cylindrique de révolution 22. Le corps de vanne 20 présente un chemin d'entrée 36 du réservoir débouchant dans le col 13 du réservoir autour de l'extrémité supérieure 30 du tube 28 et à l'opposé, dans l'espace cylindrique de révolution 22.

La vanne du distribution 16 comprend, une pièce de cloisonnage 38 s'étendant longitudinalement, à l'intérieur de l'espace cylindrique 22, un organe de distribution tubulaire 40 et un piston d'obturation 42 montés à coulissement à l'intérieur de la pièce de cloisonnage 38, ainsi que deux actionneurs opposés, un deuxième actionneur 44 pour pouvoir actionner l'organe de distribution tubulaire 40 et un troisième actionneur 46 pour pouvoir actionner le piston d'obturation 42.

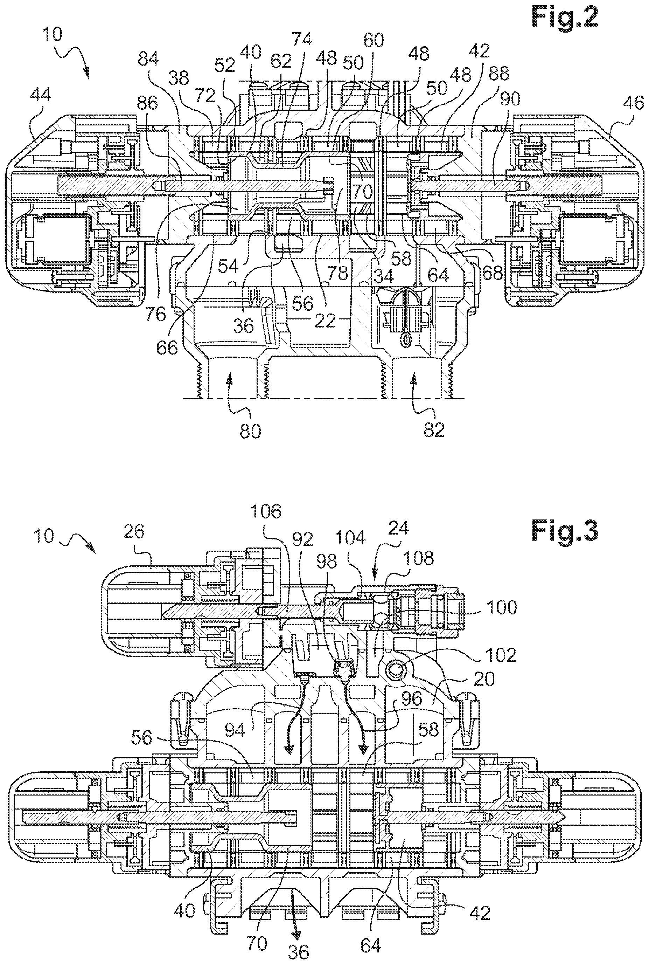

Pour détaillera maintenant en référence à la figure 2 ces derniers éléments. On retrouve plus en détail sur cette figure, le deuxième actionneur 44 opposé au troisième actionneur 46 ainsi que l'espace cylindrique de révolution transversal 22 à l'intérieur duquel est monté la pièce de cloisonnage 38. Cette dernière présente des nervures circulaires radiales équidistantes 48 reliées entre elles par des entretoises axiales 50. Les nervures circulaires radiales 48 présentent chacune, un joint périphérique externe 52 destiné à venir s'appliquer de manière étanche contre la paroi interne de l'espace cylindrique de révolution 22, et à l'opposé, un joint interne 54, contre lequel est apte à venir s'appliquer de manière étanche l'organe de distribution tubulaire 40.

La pièce de cloisonnage 38 présente, conformément à la variante de réalisation présentée sur cette figure 2, huit nervures circulaires radiales 48 équidistantes définissant, entre elles, sept portions annulaires successives de la chambre de distribution, sensiblement d'un même volume. En outre, les joints internes 54 de ces nervures circulaires radiales 48 définissent une portion cylindrique circulaire de la chambre de distribution, à l'intérieur de laquelle l'organe de distribution tubulaire 40 va pouvoir être entraîné en translation comme on l'expliquera ci-après.

Ainsi, les nervures circulaires radiales 48 définissent, dans la chambre de distribution, deux portions annulaires proximales, une portion proximale d'entrée 56 et une portion proximale de sortie 58 séparées par une portion médiane borgne 60. Elles définissent également, deux portions annulaires distales, une portion distale d'entrée 62, contiguë à la portion annulaire proximale d'entrée 56, et une portion distale de sortie 64 contiguë à la portion proximale de sortie 58. Enfin, les nervures circulaires radiales 48 définissent deux portions annulaires d'extrémité borgnes, une première 66 contiguë à la portion distale d'entrée 62 et une seconde 68 contiguë à la portion annulaire distale de sortie 64.

S'agissant de l'organe de distribution tubulaire 40, il présente deux têtes asymétriques, une tête longue 70 et une tête courte 72 d'un même diamètre, séparées l'une de l'autre par une gorge 74. La tête longue 70 s'étend axialement sur une longueur sensiblement supérieure à la distance axiale séparant deux nervures circulaires radiales 48, tandis que la tête courte 72 s'étend sur une longueur sensiblement égale à la demi-distance séparant 2 nervures circulaires radiales 48. L'organe de distribution tubulaire 40, présente en outre une ouverture amont 76 débouchant axialement dans la tête courte 72, et une ouverture avale opposée 78 débouchant dans la tête longue 70. L'ouverture avale opposée 78 définit un siège. Quant à la gorge 74, elle s'étend axialement, sur une longueur sensiblement équivalente à 1,5 fois la distance qui sépare 2 nervures circulaires radiales 48. Les têtes 70, 72, viennent en contact étanche avec les joints internes 54 des nervures circulaires radiales 48. Aussi, dans la position de l'organe de distribution tubulaire 40 telle que représentée sur la figure 2, la portion distale d'entrée 62 communique axialement avec la portion proximale d'entrée 56 grâce à la gorge 74.

Quant au piston d'obturation 42, il présente un diamètre équivalent aux diamètres des têtes 70, 62, et il s'étend ici dans une position rétractée.

Aussi, la vanne de distribution 10 comprend une entrée d'eau brute 80, laquelle débouche radialement dans la portion distale d'entrée 62 de la chambre de distribution et une sortie d'eau traitée 82 dans laquelle débouche radialement la portion distale de sortie 64. Au surplus, on observera que la portion proximale d'entrée 56 débouche radialement dans le chemin d'entrée 36 du réservoir, tandis que le chemin de sortie 34 du réservoir débouche radialement dans la portion proximale de sortie 58.

On observera également, que l'espace cylindrique 22 formant la chambre de distribution est refermée de façon hermétique à ses deux extrémités opposées, par 2 flasques, un premier flasque 84 traversé de manière étanche par une première tige de commande 86, et un second flasque 88 traversé par une seconde tige de commande 90. La première tige de commande 86 relie solidairement l'organe de distribution tubulaire 40 et le deuxième actionneur 44, tandis que la seconde tige de commande 90 relie le piston d'obturation 42 et le troisième actionneur 46.

Avant de revenir sur la figure 2, on décrira, en référence à la figure 3, la vanne d'alimentation en liquide régénérant 24 commandée par le premier actionneur électromécanique 26 et plus généralement le bloc surmontant le corps de vanne 20. Ainsi, le corps de vanne 20 comporte une chambre de réception du liquide régénérant 92, d'une part, et un premier et un second canal d'écoulement 94, 96, d'autre part, prolongeant la chambre de réception 92 et débouchant respectivement dans la portion proximale d'entrée 56 et dans la portion proximale de sortie 58. Les canaux d'écoulement 94, 96 sont destinés à être obturés l'un ou l'autre au moyen d'un obturateur 98. En outre, le corps de vanne 20 comprend une chambre d'aspiration 100 débouchant dans un venturi non représenté, lequel est alimenté en eau traitée au niveau d'une alimentation 102. La vanne d'alimentation en liquide régénérant 24 présente un manchon d'obturation 104 relié au premier actionneur 26 par l'intermédiaire d'une tige de commande 106, et en regard du manchon d'obturation 104, une cage de réception cylindrique 108 dans laquelle débouche le conduit du réservoir de liquide régénérant 18. Tel que représenté sur la figure 3, le manchon d'obturation 104 est écarté à l'extérieur de la cage de réception 108 et le liquide régénérant peut se déverser à l'intérieur de la chambre d'aspiration 100. Lorsque le manchon d'obturation 104 est commandé en translation à l'intérieur de la cage de réception cylindrique 108, l'écoulement du liquide régénérant est stoppé.

On reviendra à présent sur la figure 2, où précisément, le manchon d'obturation 104 non représenté est précisément logé à l'intérieur de la cage réception cylindrique 108 pour empêcher l'écoulement du liquide régénérant. Le dispositif de traitement d'eau 10 est alors sur cette figure dans une phase de service.

En outre, le piston d'obturation 42 est dans une position rétractée libérant la portion annulaire distale de sortie 64, tandis que l'organe de distribution 40 s'étend dans une position dans laquelle, non seulement la portion distale d'entrée 62 communique axialement avec la portion proximale d'entrée 56 par l'intermédiaire de la portion cylindrique grâce à la gorge 74, mais aussi, la portion proximale de sortie 58 communique axialement avec la portion distale de sortie 64 par l'intermédiaire de la portion cylindrique. De la sorte, l'eau brute arrive par l'entrée 80, et s'écoule radialement dans la portion distale d'entrée 62 puis axialement à travers la portion cylindrique dans la portion proximale d'entrée pour se déverser à l'intérieur du réservoir de résine 12. L'eau traitée remonte à l'intérieur du tube 28 et s'écoule radialement dans la portion annulaire proximale de sortie 58, puis ensuite axialement à travers la portion cylindrique dans la portion distale de sortie pour s'acheminer vers l'extérieur à travers la sortie d'eau traitée 82.

En revanche, sur la figure 3 à laquelle nous nous référerons à présent, le dispositif de traitement d'eau 10 est dans une phase de régénération dite à co-courant. Aussi, le manchon d'obturation 104 est écarté à l'extérieur de la cage de réception 108 et le liquide régénérant peut se déverser à l'intérieur de la chambre d'aspiration 100. On observera que le piston d'obturation 42 a été porté dans une position dans laquelle il vient obturer la portion annulaire distale de sortie 64 vis-à-vis de la portion cylindrique de la chambre de distribution. Au surplus, l'organe de distribution tubulaire 40 a été porté dans une position extrême opposée au piston d'obturation 42, dans laquelle la tête longue 70 isole de manière étanche, la portion annulaire proximale d'entrée 56 vis-à-vis de la portion cylindrique. Partant, le premier canal d'écoulement 94 communique directement avec le chemin d'entrée 36 du réservoir de résine 12. Ainsi, grâce à l'alimentation 102 en eau traitée du venturi, le liquide régénérant est aspirée de la chambre d'aspiration 100 pour être injecté à travers la chambre de réception 92. Le mélange vient alors s'écouler à travers le premier canal d'écoulement 94 puis dans la portion annulaire proximale d'entrée 56, autour de la tête longue 70 de l'organe de distribution tubulaire 40 de manière étanche vis-à-vis des chambres annulaires contiguës, et enfin, à travers le chemin d'entrée 36 du réservoir de résine 12 pour venir en contact avec la résine 14. Le liquide régénérant permet de la sorte de régénérer la résine échangeuse d'ions, selon le mode à co-courant.

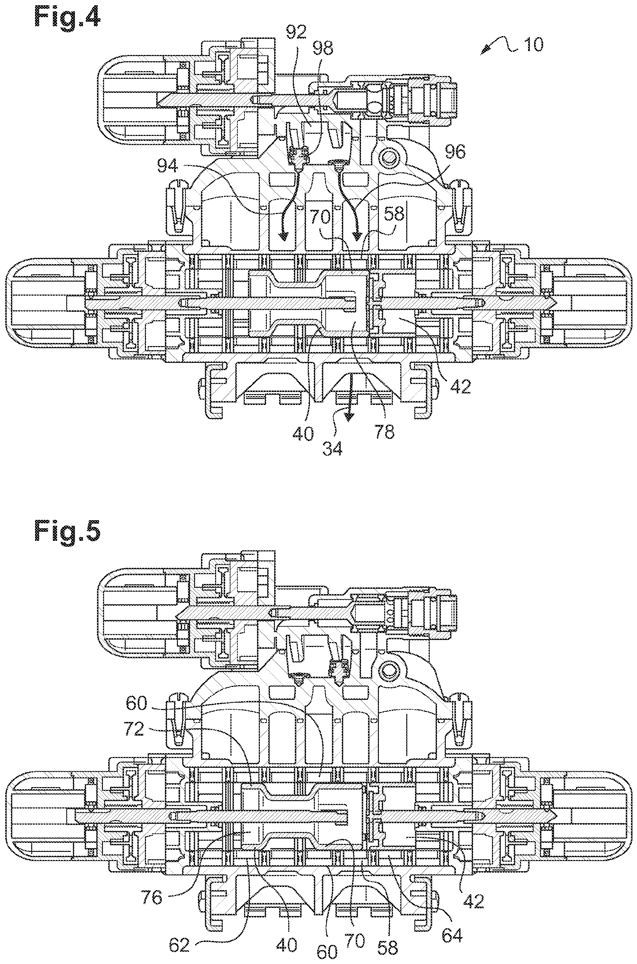

On se référera à présent à la figure 4, sur laquelle le dispositif de traitement d'eau 10 est dans une phase de régénération dite à contre-courant. Le choix du type de régénération est défini dès le montage du dispositif de traitement d'eau 10 et dépend des usages locaux ou des caractéristiques de l'eau à traiter. Aussi, par rapport à la figure 3, l'obturateur 98 de la chambre de réception du liquide régénérant 92 a été porté pour obturer le premier canal d'écoulement 94 du liquide régénérant de manière à libérer le second canal d'écoulement 96. L'obturateur 98 est ainsi installé lors du montage de la vanne de distribution 16. En outre, par rapport à la figure 3, l'organe de distribution 40 a été porté dans une position extrême opposée, contre le piston d'obturation 42. Ainsi, le piston d'obturation 42 prend appui dans le siège de l'ouverture avale 78 de l'organe de distribution 40, de manière étanche. Partant, le mélange d'eau et de liquide régénérant vient s'écouler à travers le second canal d'écoulement 96 puis dans la portion annulaire proximale de sortie 58, autour de la tête longue 70 de l'organe de distribution tubulaire 40 de manière étanche vis-à-vis des chambres annulaires contiguës, et enfin, à travers le chemin de sortie 34 du réservoir de résine 12 pour venir en contact avec la résine 14. Le liquide régénérant permet de la sorte de régénérer la résine échangeuse d'ions, selon le mode dit à contre-courant. On observera que le montage d'un tel dispositif de traitement d'eau dans l'un ou l'autre des modes de régénération est relativement aisé, puisqu'il suffit de permuter l'obturateur 98 dans la chambre de réception 92. Il n'est nul besoin de prévoir le retournement de l'organe de distribution tubulaire 40. Ceci est rendu possible grâce au piston d'obturation 42.

On décrira à présent, en référence aux figures 5, 6, et 7, le dispositif de traitement d'eau 10 dans des phases techniques transitoires.

Tel que représenté sur la figure 5, le dispositif de traitement d'eau 10, est dans une phase dite de détassage. Le piston d'obturation 42 obture la portion annulaire distale de sortie 64 vis-à-vis de la portion cylindrique de la chambre de distribution, tandis que l'organe de distribution tubulaire 40 est ajusté dans une position dans laquelle la tête longue 70 est à cheval sur la potion médiane borgne 60 et la portion proximale de sortie 58, tandis que la tête courte 72 s'étend dans une demi partie axiale de la portion annulaire distale d'entrée 62 et de manière étanche vis-à-vis de la portion annulaire borgne 60. De la sorte, l'eau brute s'écoule radialement dans la portion annulaire distale d'entrée 62 puis axialement, à travers l'ouverture amont 76, puis à l'intérieur de l'organe de distribution tubulaire 40, pour déboucher radialement dans la portion annulaire distale de sortie 64. L'eau brute s'engage ensuite à rebours, à travers le chemin de sortie 34, et vient ainsi refouler à travers le tube 18, la résine échangeuse d'ions vers l'intérieur du réservoir 12.

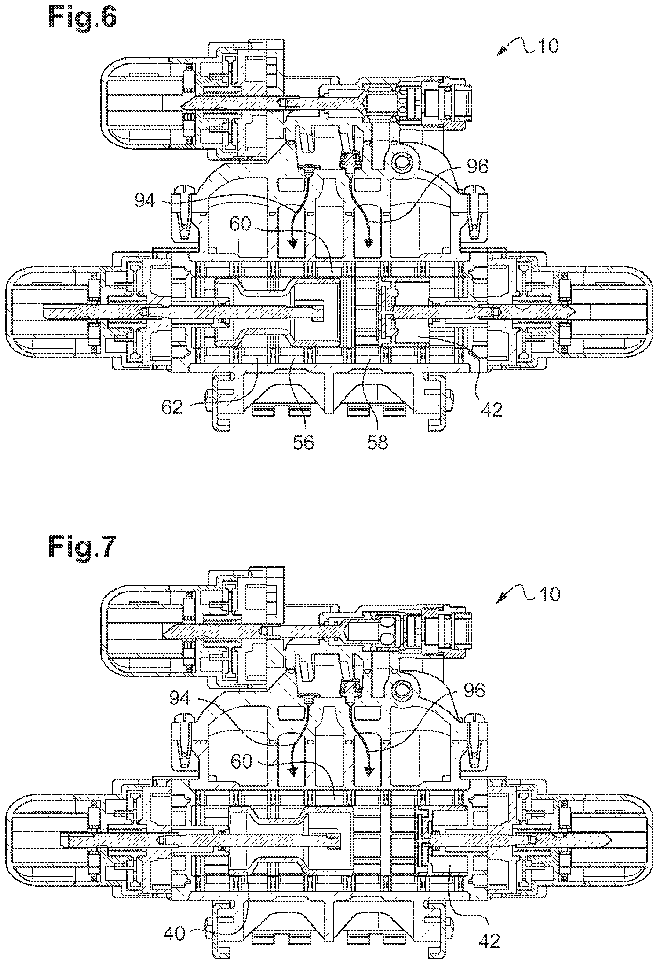

La figure 6 illustre le dispositif de traitement d'eau 10 dans une situation de rinçage rapide. Le piston d'obturation 42 obture la portion annulaire distale de sortie 64 vis-à-vis de la portion cylindrique de la chambre de distribution, tandis que l'organe de distribution tubulaire 40 est ajusté dans une position dans laquelle la tête longue 70 est à cheval sur la potion médiane borgne 60 et la portion proximale d'entrée 56. De la sorte, l'eau brute de l'entrée 80 s'écoule radialement dans la portion distale d'entrée 62 puis axialement à travers la portion cylindrique dans la portion proximale d'entrée 56 pour se déverser à l'intérieur du réservoir de résine 12, et aussi, remonter au moins partiellement dans le premier canal d'écoulement 94 pour venir y rincer le liquide régénérant. L'eau remonte également à l'intérieur du tube 28 et s'écoule radialement dans la portion annulaire proximale de sortie 58, puis ensuite, peut remonter également partiellement dans le second canal d'écoulement 96 pour venir y rincer le liquide régénérant.

On se reportera à présent sur la figure 7, sur laquelle l'organe de distribution tubulaire 40 et le piston d'obturation 42 sont dans une position analogue à celle de la position de service telle qu'illustrée sur les figures 1 et 2. En revanche, le manchon d'obturation 104 de la vanne d'alimentation en liquide régénérant 24, est écarté à l'extérieur de la cage de réception 108. De la sorte, l'eau brute de l'entrée 80 qui s'écoule dans la portion distale d'entrée 62 puis à travers la portion cylindrique dans la portion proximale d'entrée 56 peut remonter dans le premier canal d'écoulement 94 pour pouvoir être réinjectée à l'intérieur du réservoir de liquide régénérant 18.

On observera que la vanne de distribution 16 du dispositif de traitement d'eau 10 tel que représenté sur les figures 1 à 7, peut aisément être mise en série avec une succession d'autres vannes de distribution identiques de manière à pouvoir traiter simultanément de grandes quantités d'eau brute.

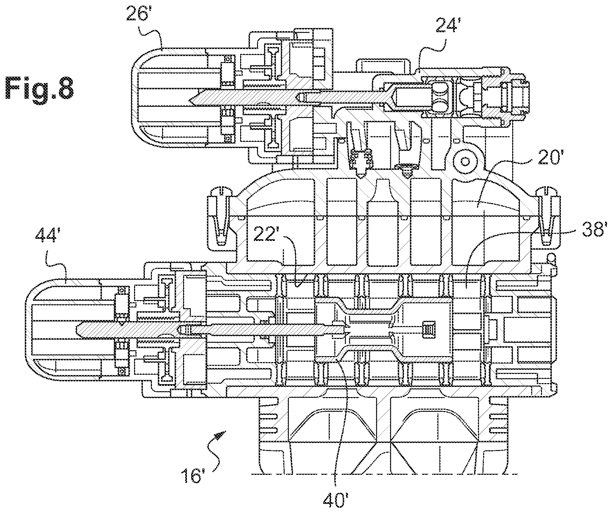

On se reportera maintenant à la figure 8 montrant un dispositif de traitement d'eau conforme à l'invention dans une seconde variante de réalisation. Les éléments identiques présentant la même fonction que celle qu'ils exercent selon la première variante de réalisation, présentent la même référence affectée d'un signe prime «'». On y retrouve une vanne de distribution 16' présentant un corps de vanne 20', et un espace cylindrique de révolution transversal 22'. La vanne de distribution 16' comprend une pièce de cloisonnage 38' logée à l'intérieur de l'espace cylindrique de révolution transversal 22', plus courte que la pièce de cloisonnage selon la première variante de réalisation, et capable de délimiter 5 portions annulaires.

En outre, elle est équipée d'un organe de distribution tubulaire 40' commandé par un deuxième actionneur 44'. En revanche, elle est dépourvue de piston d'obturation selon la première variante de réalisation. Néanmoins, le corps de vanne 20' est surmonté d'une vanne d'alimentation en liquide régénérant 24' commandable par un premier actionneur électromécanique 26'.

S'agissant du corps de vanne 20' et de la vanne d'alimentation en liquide régénérant 24' qui le surmonte, ils sont totalement identiques à ceux de la première variante de réalisation. En revanche, s'agissant de l'organe de distribution tubulaire 40', il est, tout comme l'organe de distribution tubulaire selon l'art antérieur, retournable, afin de pouvoir régénérer le liquide régénérant selon un mode à co-courant ou un mode à contre-courant.

## Revendications

1. Dispositif de traitement d'eau (10) comprenant, d'une part un réservoir de résine échangeuse d'ions (12) présentant une entrée de réservoir et une sortie de réservoir, et une vanne de distribution (16) installée sur ledit réservoir de résine (12) présentant une arrivée d'eau brute (80) et une sortie d'eau traitée (82) et, d'autre part, un réservoir de liquide régénérant (18) relié à ladite vanne de distribution (16) et une vanne d'alimentation en liquide régénérant (24) commandable entre une position ouverte et une position fermée, ladite vanne de distribution (16) comportant, d'une part une chambre de distribution (22) et un organe de distribution tubulaire (40) commandable en translation monté à l'intérieur de ladite chambre de distribution (22) et, d'autre part, un actionneur (44) pour commander ledit organe de distribution tubulaire (40) entre, une position de service dans laquelle ladite arrivée d'eau brute (80) communique avec ladite entrée de réservoir, tandis que ladite sortie de réservoir communique avec ladite sortie d'eau traitée (82), et lorsque ladite vanne d'alimentation en liquide régénérant (18) est commandée en position ouverte, soit une première position de traitement dans laquelle l'écoulement dudit liquide régénérant est guidé à travers ladite entrée de réservoir, soit une seconde position de traitement dans laquelle l'écoulement dudit liquide régénérant est guidé à travers ladite sortie de réservoir ;
**caractérisé en ce qu'**il comprend en outre un autre actionneur (26) pour commander ladite vanne d'alimentation en liquide régénérant (24) indépendamment dudit un actionneur (44) dudit organe de distribution tubulaire (40), tandis que ladite vanne de distribution (16) comprend en outre un piston d'obturation (42) monté à l'intérieur de ladite chambre de distribution (22) dans le prolongement dudit organe de distribution tubulaire (40), et un dispositif d'entraînement (46) pour pouvoir entraîner ledit piston d'obturation (42) en translation indépendamment dudit organe de distribution tubulaire, de manière à pouvoir obturer la communication entre ladite sortie de réservoir et ladite sortie d'eau traitée (82), et **en ce que** ledit organe de distribution tubulaire (40) présente une extrémité équipée d'un siège (78), ledit piston d'obturation (42) étant destiné à venir s'appliquer contre ledit siège (78) pour obturer ledit organe de distribution tubulaire (40).

2. Dispositif de traitement d'eau selon la revendication 1, **caractérisé en ce que** ladite vanne de distribution (16) comprend une chambre de réception (92) dudit liquide régénérant et deux canaux d'écoulement (94, 96) prolongeant ladite chambre de réception (92) respectivement vers ladite entrée de réservoir et vers ladite sortie de réservoir.

3. Dispositif de traitement d'eau selon la revendication 2, **caractérisé en ce que** ladite vanne de distribution (16) comprend un obturateur (98) destiné à être installé à travers l'un ou l'autre desdits deux canaux d'écoulement (94, 96) pour obturer ledit un ou ledit autre desdits canaux d'écoulement.

4. Dispositif de traitement d'eau selon l'une quelconque des revendications 1 à 3, **caractérisé en ce que** ladite chambre de distribution (22) présente, d'une part, une portion cylindrique, et d'autre part, deux portions annulaires distales (62, 64) et deux portions annulaires proximales (56, 58), entourant respectivement ladite portion cylindrique et débouchant radialement dans ladite portion cylindrique.

5. Dispositif de traitement d'eau selon la revendication 4, **caractérisé en ce que** ladite arrivée d'eau débouche radialement dans l'une (62) desdites deux portions annulaires distales, tandis que l'autre (64) desdites deux portions annulaires distales débouche radialement dans ladite sortie d'eau traitée.

6. Dispositif de traitement d'eau selon la revendication 4 ou 5, **caractérisé en ce que** ladite chambre de distribution (22) présente deux portions annulaires d'extrémité borgnes respectivement contiguës desdites deux portions annulaires distales (62, 64).

7. Dispositif de traitement d'eau selon l'une quelconque des revendications 4 à 6, **caractérisé en ce que** l'une desdites deux portions annulaires proximales (56) débouche radialement dans ladite entrée de réservoir, tandis que ladite sortie de réservoir débouche radialement dans l'autre (58) desdites deux portions annulaires proximales.

8. Dispositif de traitement d'eau selon l'une quelconque des revendications 1 à 7, **caractérisé en ce que** ledit organe de distribution tubulaire (40) présente une tête longue (70) et une tête courte (72) opposée, séparées l'une de l'autre par une gorge (74).

## Patentansprüche

1. Wasserbehandlungsvorrichtung (10), umfassend einerseits einen Ionenaustauscherharzbehälter (12), der einen Behältereingang und einen Behälterausgang und ein Verteilerventil (16) aufweist, das auf dem Harzbehälter (12) installiert ist und einen Rohwasserzulauf (80) und einen Ausgang des behandelten Wassers (82) aufweist, und andererseits einen Regenerierungsflüssigkeitsbehälter (18), der mit dem Verteilerventil 16) und einem Zufuhrventil für die Regenerierungsflüssigkeit (24) verbunden ist, das zwischen einer offenen Position und einer geschlossenen Position steuerbar ist, wobei das Verteilerventil (16) einerseits eine Verteilerkammer (22) und ein translatorisch steuerbares, rohrförmiges Verteilerelement (40), das in der Verteilerkammer (22) angebracht ist, und andererseits einen Aktuator (44) umfasst, um das rohrförmige Verteilerelement (40) zwischen einer Betriebsposition, in der der Rohwasserzulauf (80) mit dem Behältereingang verbunden ist, während der Behälterausgang mit dem Ausgang des behandelten Wassers (82) verbunden ist, und, wenn das Zufuhrventil für die Regenerierungsflüssigkeit (18) in offener Position gesteuert ist, entweder einer ersten Behandlungsposition, in der der Fluss der Regenerierungsflüssigkeit durch den Behältereingang geführt wird, oder einer zweiten Behandlungsposition, in der der Fluss der Regenerierungsflüssigkeit durch den Behälterausgang geführt wird, zu steuern;
**dadurch gekennzeichnet, dass** sie ferner einen weiteren Aktuator (26) umfasst, um das Zufuhrventil für die Regenerierungsflüssigkeit (24) unabhängig vom Aktuator (44) des rohrförmigen Verteilerelements (40) zu steuern, während das Verteilerventil (16) ferner einen Verschlusskolben (42), der in der Verteilerkammer (22) in der Verlängerung des rohrförmigen Verteilerelements (40) angebracht ist, und eine Antriebsvorrichtung (46) umfasst, um den Verschlusskolben (42) unabhängig vom rohrförmigen Verteilerelement translatorisch antreiben zu können, so dass die Verbindung zwischen dem Behälterausgang und dem Ausgang des behandelten Wassers (82) verschlossen werden kann, und dadurch, dass das rohrförmige Verteilerelement (40) ein Ende aufweist, das mit einem Sitz (78) ausgestattet ist, wobei der Verschlusskolben (42) dazu bestimmt ist, sich gegen den Sitz (78) zu legen, um das rohrförmige Verteilerelement (40) zu verschließen.

2. Wasserbehandlungsvorrichtung nach Anspruch 1, **dadurch gekennzeichnet, dass** das Verteilerventil (16) eine Aufnahmekammer (92) für die Regenerierungsflüssigkeit und zwei Durchflusskanäle (94, 96) umfasst, die die Aufnahmekammer (92) jeweils in Richtung des Behältereingangs und des Behälterausgangs verlängern.

3. Wasserbehandlungsvorrichtung nach Anspruch 2, **dadurch gekennzeichnet, dass** das Verteilerventil (16) einen Verschluss (98) umfasst, der dazu bestimmt ist, durch einen der beiden Durchflusskanäle (94, 96) installiert zu werden, um einen der beiden Durchflusskanäle zu verschließen.

4. Wasserbehandlungsvorrichtung nach einem beliebigen der Ansprüche 1 bis 3, **dadurch gekennzeichnet, dass** die Verteilerkammer (22) einerseits einen zylindrischen Abschnitt und andererseits zwei distale ringförmige Abschnitte (62, 64) und zwei proximale ringförmige Abschnitte (56, 58) aufweist, die jeweils den zylindrischen Abschnitt umgeben und radial in den zylindrischen Abschnitt münden.

5. Wasserbehandlungsvorrichtung nach Anspruch 4, **dadurch gekennzeichnet, dass** der Wasserzulauf radial in den einen (62) der beiden distalen ringförmigen Abschnitte mündet, während der andere (64) der beiden distalen ringförmigen Abschnitte radial in den Ausgang des behandelten Wassers mündet.

6. Wasserbehandlungsvorrichtung nach Anspruch 4 oder 5, **dadurch gekennzeichnet, dass** die Verteilerkammer (22) zwei ringförmige Abschnitte mit Blindenden aufweist, die jeweils zu den beiden distalen ringförmigen Abschnitten (62, 64) benachbart sind.

7. Wasserbehandlungsvorrichtung nach einem beliebigen der Ansprüche 4 bis 6, **dadurch gekennzeichnet, dass** der eine der beiden proximalen ringförmigen Abschnitte (56) radial in den Behältereingang mündet, während der Behälterausgang radial in den anderen (58) der beiden proximalen ringförmigen Abschnitte mündet.

8. Wasserbehandlungsvorrichtung nach einem beliebigen der Ansprüche 1 bis 7, **dadurch gekennzeichnet, dass** das Verteilerelement (40) einen langen Kopf (70) und einen gegenüberliegenden kurzen Kopf (72) aufweist, wobei die beiden Köpfe von einander durch eine Auskehlung (74) getrennt sind.

## Claims

1. A water treatment device (10) comprising, on the one hand, an ions exchanging resin tank (12) having a tank inlet and a tank outlet, and a distribution valve (16), fitted on said resin tank (12), having a raw water arrival (80) and a treated water outlet (82) and, on the other hand, a regenerating liquid tank (18) connected to said distribution valve (16) and a feeding valve for a regenerating liquid (24) controllable between an open position and a closed position, said distribution valve (16) including, on the one hand, a distribution chamber (22) and a tubular distribution member (40) controllable in a translation movement and fitted within said distribution chamber (22) and, on the other hand, an actuator (44) intended to control said tubular distribution member (40) between an operating position in which said raw water arrival (80) communicates with said tank inlet, while said tank outlet communicates with said treated water outlet (82), and when said regenerating liquid feeding valve (18) is driven in an open position, either a first treatment position in which the flow of said regenerating liquid is guided through said tank inlet, or a second treatment position in which the flow of said regenerating liquid is guided through said tank outlet;
**characterized in that** it further comprises another actuator (26) to drive said feeding valve for regenerating liquid (24) independently from said actuator (44) of said tubular distribution member (40), while said distribution valve (16) further comprises a closing piston (42) fitted within said distribution chamber (22) in the extension of said tubular distribution member (40), and a driving mechanism (46) intended to drive said closing piston (42) in a translation movement independently to said tubular distribution member, so as to be able to seal the communication between said tank outlet and said treated water outlet (82), and **in that** said tubular distribution member (40) has an end provided with a seat (78), said closing piston (42) being intended to be applied against said seat (78) to seal said tubular distribution member (40).

2. The water treatment device according to claim 1, **characterized in that** said distribution valve (16) comprises a receiving chamber (92) for said regenerating liquid and two flowing channels (94, 96) extending said receiving chamber (92) respectively toward said tank inlet and toward said tank outlet.

3. The water treatment device according to claim 2, **characterized in that** said distribution valve (16) comprises a shutter (98) intended to be mounted through one or the other of said two flowing channels (94, 96) to seal said one or said other of said flowing channels.

4. The water treatment device according to any of claims 1 to 3, **characterized in that** said distribution chamber (22) has, on the one hand, a cylindrical portion and, on the other hand, two distal annular portions (62, 64) and two proximal annular portions (56, 58), surrounding said cylindrical portion and respectively emerging radially into said cylindrical portion.

5. The water treatment device according to claim 4, **characterized in that** said water arrival radially emerges into one (62) of said two distal annular portions, while the other (64) of said two distal annular portions radially emerges into said treated water outlet.

6. The water treatment device according to claim 4 or 5, **characterized in that** said distribution chamber (22) has two blind annular end portions respectively contiguous to said two distal annular portions (62, 64).

7. The water treatment device according to any of claims 4 to 6, **characterized in that** one of said two proximal annular portions (56) radially emerges into said tank inlet, while said tank outlet radially emerges into the other (58) of said two proximal annular portions.

8. The water treatment device according to any of claims 1 to 7, **characterized in that** said tubular distribution member (40) has a long head (70) and an opposite short head (72), separated the one to the other by a throat (74).
